# EUROPEAN PATENT APPLICATION

(11) **EP 1 696 087 A1**
(43) Date of publication of application: **30.08.2006**
(21) Application number: 06075113.8
(22) Date of filing: 17.01.2006
(51) Int. Cl.: E04H 6/02

(54) **Carport**

(30) Priority: 21.01.2005 EP 05075140
(71) Applicant: Corus Bausysteme GmbH, 56070 Koblenz (DE)
(72) Inventor: Kenda, Mario, 50321 Brühl (DE)
(74) Representative: van der Donk, Henricus Matheus

(57) **Abstract**

Carport comprising a standing seam roof, the standing seam roof being supported by a supporting structure wherein the standing seam roof is provided with solar energy conversion means.

## Description

The invention relates to a carport.

Nowadays, living houses are often provided with solar installations such as solar cells or photovoltaic cells. These installations are usually mounted on the roof of the house. The accompanying equipment such as a thermal accumulator is often accommodated immediately under the roof. Also the equipment is usually mounted in a fixed position, thereby showing a varying yield in dependence of the position of the sun.

A disadvantage of this arrangement is that living space in the house is used.

Another disadvantage is that the yield of the solar installations is dependent on the position of the sun.

More and more houses are provided with a carport for parking a car and protecting it against the elements. These carports typically comprise a roof suspended above the ground at a height which is sufficient for parking the car en entering and exiting the car. Typically, the carport itself has no walls.

It is an object of the invention to provide a carport with solar installations without burdening the living space in the house. It is also an object of the invention to provide a carport with solar installations having a higher yield.

According to the invention at least one of these objects is reached by providing a carport comprising a standing seam roof, the standing seam roof being supported by a supporting structure wherein the standing seam roof is provided with solar energy conversion means.

Large modem buildings are often provided with a standing seam roof for covering large surfaces. These roofs are made from substantially flat building elements, wherein the building elements are provided with upstanding flanges along opposite sides and a substantially flat intermediate portion between the flanges. The flanges are designed so as to co-operate with flanges of adjacent building members, for instance with a male-female joint and form the standing seam. Retaining elements, such as those known from DE-3442398, are used to hold the building elements to the building. These standing seams extend over a substantial part of the roof and are substantially parallel. The building elements are usually made from a thin sheet of metal, such as steel, aluminium or an aluminium alloy. The standing seam roof has not been used for constructing smaller building constructions such as the carport according to the invention. The advantage of using standing seam roofing is that the standardised building elements allow a quick assembly of the roof and that the weight of the roof can be kept low. This also allows the assembly to be completed entirely off-site under carefully controlled conditions. The solar energy conversion means can be installed on the roof using the standing seams as a flange to fixedly mount the solar energy conversion means.

In the carport according to the invention no space is used in the house to accommodate any hardware relating to the solar energy conversion means. Any thermal accumulator, for instance for storing hot water or any other hot heat absorbing medium heated by the sun in the solar energy conversion means, can be installed under or near the carport, preferably in a thermally isolated containment.

In an embodiment of the invention, the solar energy conversion means are provided between the standing seams of the standing seam roof. In between the standing seams solar energy conversion means can be placed. The standing seams provide protection against damage of the solar energy conversion means and also allow a smoother finish of the roof. The solar energy conversion means can be provided in the form of an exchangeable module, wherein the module is mounted in the intermediate portion between the upstanding flanges of the building elements as described above. The module preferably has a height not exceeding the height of the standing seams of the roof, thereby allowing a smooth finish of the roof. The module may be wedged, preferably tightly wedged, between the standing seams of the roof and/or may be fastened to the building element and thus the standing seam roof using fastening means. The exchangeable module may comprise thermal solar collectors and/or photovoltaic cells.

In an embodiment of the invention the solar energy conversion means comprise photovoltaic cells for converting solar energy into electric energy, the photovoltaic cells preferably being in the form of a foil, the foil being fixedly fastenable to the standing seam roof. The photovoltaic cells are preferably mounted in the intermediate portion between the flanges. These photovoltaic cells, particularly when in the form of a foil, can be easily fastened between the standing seams using adhesive means, such as a double sided tape, or a suitable adhesive or glue.

In an embodiment of the invention the supporting means comprise at least one standing support. The supporting means supporting the roof comprise at least one standing support in case the supporting means are connected to a wall of a neighbouring house or other structure. In case the carport is a free-standing carport, the supporting means comprises at least two standing supports, although one standing support may be sufficient if designed to withstand the elements. In a preferred embodiment, the standing support comprises an HEA-girder. These girders, or girders of a similar type, such as U-type girders, combine a large strength with a large stiffness. Instead, of girders, tubes of any suitable cross section, such as rectangular or round, could be used in the standing support.

In an embodiment of the invention the standing seam roof is provided with positioning means so as to enable positioning the roof in dependence of the location of the sun. The positioning means thus enable to position the roof in a position having the maximum yield of the solar energy conversion means. The pivoting action may also serve to enable snow which has fallen onto the roof to be removed from the roof easily.

In an embodiment of the invention the standing seam roof is pivotable around a substantially horizontal pivoting axis, the pivoting axis extending through the at least one standing support, if present. In this embodiment the roof is pivotable around a pivoting axis. In case the supporting means comprise two standing supports, the pivoting axis extends through both standing supports. In the case the carport is constructed in a substantially east-west direction, the roof can be pivoted in the morning so as to collect as much solar energy as possible of the sun being located in the east, whereas in the afternoon the roof can be pivoted so as to collect as much solar energy as possible of the sun being located in the west. An intermediate position may be chosen in the intermediate period. This pivoting of the roof of the carport may be done manually, or automatically, for instance using a timer.

In an embodiment of the invention, the carport is provided with sensors for determining the position of the sun, and with positioning means so as to enable positioning the roof in dependence of the location of the sun, preferably wherein the positioning means comprise an electromotor. In a preferred embodiment the energy for the positioning means is provided by the solar energy conversion means, preferably wherein the positioning means comprise an electromotor and wherein the solar energy conversion means comprise photovoltaic cells. The positioning means can thus operate automatically and autarkic. If the solar energy conversion means comprise photovoltaic cells, the electricity generated by these cells can be used to power the sensors and the electromotor or electromotors.

By providing the positioning means with means to tilt the pivoting axis in respect to the horizontal, an additional degree of freedom of the positioning of the roof can be obtained. This way the roof can not only be pivoted around a pivoting axis, but by providing the additional tilting of the pivoting axis, the roof can be tilted in a direction which is substantially perpendicular to the pivoting axis. This way a three dimensional positioning of the roof can be provided. The same effect can be obtained by providing the carport with four standing supports. The roof is attached to the standing supports by joints, for instance of a ball-and-socket type, which can be moved up-and-down along the respective standing support, thus enabling to tilt the roof in any desired position. It will be clear than when the roof is tilted, the increased distance between the points where the roof is attached to the standing supports using the joints has to be compensated.

In an embodiment of the invention the standing seam roof is provided with draining means for draining precipitation such as rain or molten snow and wherein preferably the draining means are at least partly accommodated in or at the at least one standing support, if present. Preferably the supporting means for supporting the standing seam roof form an integrated part of the draining means. The liquid precipitation is led from the roof to an integrated gutter system and to the supporting means and from hence to the draining means which are at least partly accommodated in or at the at least one standing support, such as a draining pipe. The draining connection between the support structure and the draining means in or at the at least one standing support is of a known type.

In an embodiment of the invention the standing seam roof is substantially flat. This type of roof is easiest to produce, and therefore the most economical. It will also generate the highest yield per unit of surface directed towards the sun, because the complete surface faces the sun in the same way. However, it is also possible to provide the carport according to the invention with a curved surface if circumstances so dictate, demand or if it is so desired. This curvature may be a smooth curvature, such as a convex, concave or wave like shape, but it may also be serrated or have surfaces which are at an angle with respect to eachother.

In an embodiment of the invention, the carport comprises a plurality of individual standing seam roofs, and wherein the individual standing seam roofs are individually positionable. This embodiment allows a number of standing seam roofs to be combined, wherein a standing support of a roof can also be the standing support of the adjacent roof. This way a number of separately orientable roofs can be provided. The carport according to the invention is not limited in width of the roof. It is possible to provide a carport for a plurality of vehicles, provided the strength of the construction is sufficient to withstand the elements (wind, snow, etc). The pivoting axis will generally be substantially perpendicular to the side edges of the roof, but it is also possible that the pivoting axis is at a different angle to the side edges of the roof. By using a different angle, the yield of the solar energy conversion means could be further increased for carports which can not be built in the most desired orientation.

The carport according to the invention may be produced largely off-site or provided as building blocks, and the preparations of the site where the carport is to be erected such as one or more of the following activities: installing drainage, installing electricity, installation of thermal accumulator, providing foundations, providing the standing supports, paving. After these preparations have been completed, the roof, preferably already including the solar energy conversion means, and the supporting structure can be put in place. The advantage of preparing the roof off-site is that the roof can be constructed under carefully controlled conditions.

Lighting can be integrated in the supporting structure or the roof, for instance for decorative or orientation purposes, but also for safety and practical purposes. The lighting could be coupled to a timer, a movement sensor or a light sensor.

The invention will now be further described with reference to the following schematic and non-limitative drawings in which:
Fig. 1 shows a schematic perspectivistic view of the carport as seen from above;
Fig. 2 shows a schematic side-view of the carport, with three different positions of the roof in dependence of the position of the sun;
Fig. 3 shows a schematic side-view of the carport, with the arrows indicating the flow of liquid precipitation depending on the position of the roof;
Fig. 4 show a schematic detail of the connection between a standing support and the support structure supporting the roof;
Fig. 5 shows a schematic detail of the support structure supporting the roof;
Fig. 6 shows a plurality of adjacent carports.

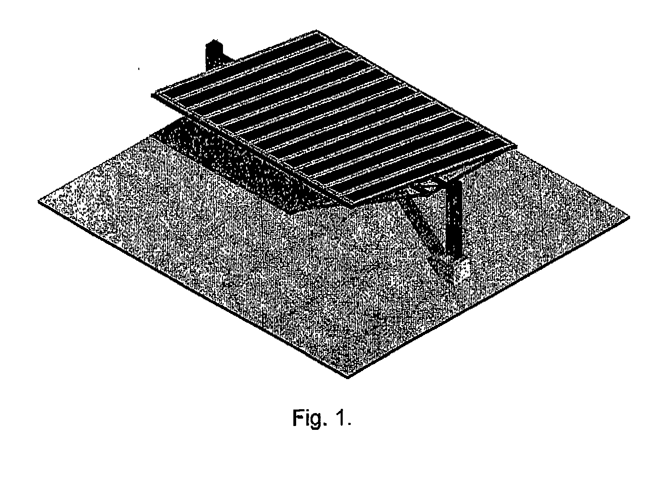

In Fig. 1 a carport 1 according to the invention is shown. The standing seam roof 2 is supported by a supporting structure 3. Solar energy conversion means 4 are provided between the standing seams of the roof 2. The supporting structure 3 is attached to the standing supports 5.

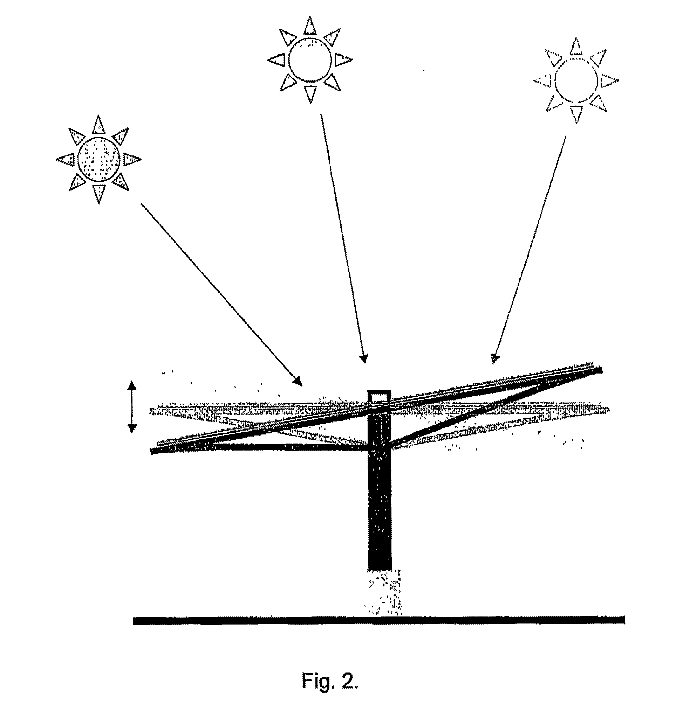

Fig. 2 shows a schematic side-view of the carport 1, with three different positions of the roof in dependence of the position of the sun.

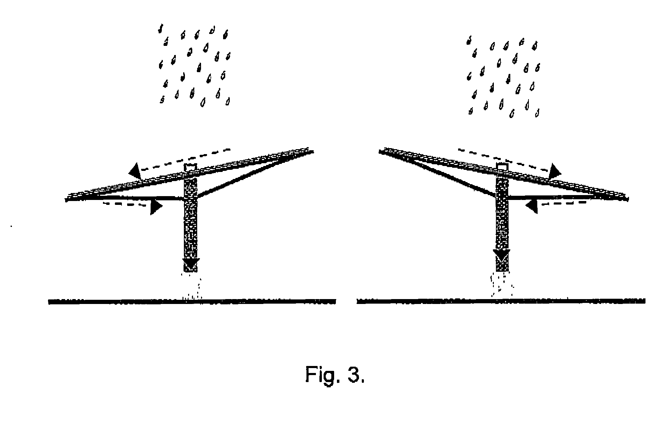

Fig. 3 shows a schematic side-view of the carport, with the arrows indicating the flow of liquid precipitation depending on the position of the roof. A gutter system is integrated in the supporting structure so as to direct liquid precipitation such as rain or molten snow from the roof to the standing support where it is led away, for instance to a drain or a street gutter. This way no water falls from the roof onto the ground immediately below the edges of the roof.

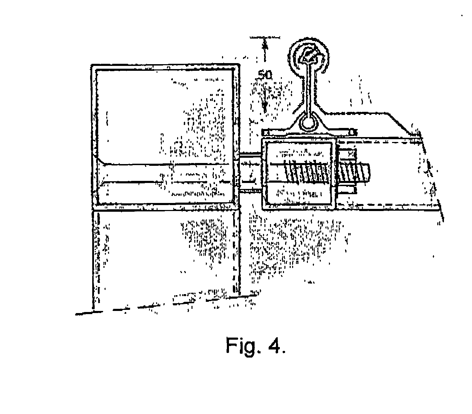

Fig. 4 show a schematic cross section of a detail of the connection in front view between a standing support 5 and the support structure 3 supporting the roof. The roof comprises building elements 6 which are held to the supporting structure 3 by retaining elements 7 of a known type. The retaining element 7 in the figure is an example of a flexible retaining element comprising two parts 7a, 7b. Standard retaining elements only comprise one part wherein the parts 7a and 7b are integrated. Pivoting means 8 are indicated as well. These pivoting means 8 allow pivoting of the support structure 3 with respect to the standing support 5.

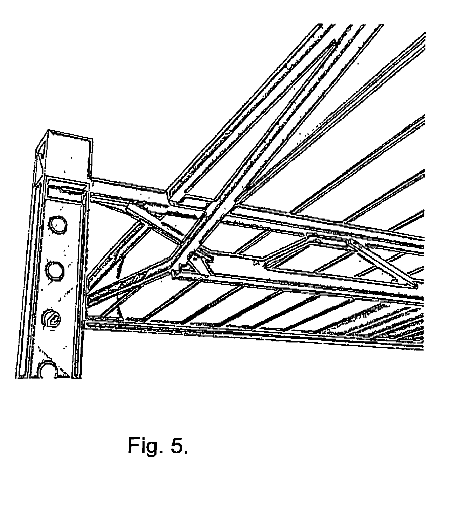

Fig. 5 shows a schematic detail of the support structure supporting the roof as seen from below. A standing support 5, made from an HEA-girder, is shown as well as the connection between the standing support 5 and the supporting structure 3 supporting the roof 2.

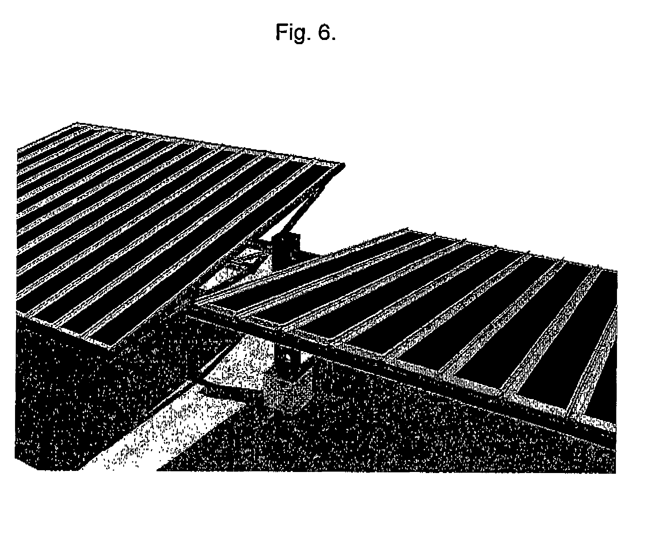

Fig. 6 shows a plurality of adjacent carports. The adjacent carports have individually positionable roofs, which allows independent positioning in different positions if so desired.

It is of course to be understood that the present invention is not limited to the described embodiments and examples described above, but encompasses any and all embodiments within the scope of the description and the following claims.

## Claims

1. Carport comprising a standing seam roof, the standing seam roof being supported by a supporting structure wherein the standing seam roof is provided with solar energy conversion means.

2. Carport according to claim 1, wherein the solar energy conversion means are provided between the standing seams of the standing seam roof.

3. Carport according to any of the preceding claims, wherein the solar energy conversion means comprise photovoltaic cells for converting solar energy into electric energy, the photovoltaic cells preferably being in the form of a foil, the foil being fixedly fastenable to the standing seam roof.

4. Carport according to any of the preceding claims, wherein the supporting means comprise at least one standing support.

5. Carport according to any of the preceding claims, wherein the standing seam roof is provided with positioning means so as to enable positioning the roof in dependence of the location of the sun.

6. Carport according to any of the preceding claims, wherein the standing seam roof is pivotable around a substantially horizontal pivoting axis, the pivoting axis extending through the at least one standing support, if present.

7. Carport according to any of the preceding claims, wherein the carport is provided with sensors for determining the position of the sun, and with positioning means so as to enable positioning the roof in dependence of the location of the sun, preferably wherein the positioning means comprise an electromotor.

8. Carport according to claim 7, wherein the energy for the positioning means is provided by the solar energy conversion means, preferably wherein the positioning means comprise an electromotor and wherein the solar energy conversion means comprise photovoltaic cells.

9. Carport according to any of the preceding claims, wherein the standing seam roof is provided with draining means for draining precipitation such as rain and wherein preferably the draining means are at least partly accommodated in or at the at least one standing support, if present.

10. Carport according to any of the preceding claims, wherein the standing seam roof is substantially flat.

11. Carport according to any of the preceding claims, wherein the carport comprises a plurality of individual standing seam roofs, and wherein the individual standing seam roofs are individually positionable.
